# EUROPÄISCHE PATENTSCHRIFT

(11) **EP 3 600 209 B1**
(45) Veröffentlichungstag und Bekanntmachung des Hinweises auf die Patenterteilung: **14.02.2024**
(21) Anmeldenummer: 18709582.3
(22) Anmeldetag: 08.03.2018
(51) Int. Cl.: A61G 15/14, G01F 23/22, G01F 23/296, B67D 1/12

(54) **MUNDGLAS-BEFÜLLUNGSANORDNUNG**
RINSING GLASS-FILLING ARRANGEMENT
ENSEMBLE DE REMPLISSAGE DE VERRE DE RINÇAGE

(30) Priorität: 30.03.2017 DE 102017205421
(43) Veröffentlichungstag der Anmeldung: 05.02.2020
(73) Patentinhaber: KaVo Dental GmbH, 88400 Biberach (DE)
(72) Erfinder: HACKEL, André, 88400 Biberach (DE); MÖSSLANG, Hubert, 89610 Oberdischingen (DE); SCHMIDBERGER, Markus, 88400 Stafflangen (DE); WELTE, Wolfgang, 88427 Bad Schussenried (DE); SCHÖNENBERGER, Richard, 88299 Leutkirch (DE)
(74) Vertreter: Thun, Clemens
(86) Internationale Anmeldenummer: PCT/EP2018/055746
(87) Internationale Veröffentlichungsnummer: WO 2018/177712

(56) Entgegenhaltungen:
- WO-A1-2014/065837
- US-A- 5 744 793
- US-A1- 2017 051 963

## Beschreibung

Die Erfindung betrifft eine Mundglas-Befüllungsanordnung, einen Behandlungsplatz mit einer solchen Mundglas-Befüllungsanordnung, sowie ein Verfahren zum Befüllen eines an einem zahnärztlichen Behandlungsplatz bereitgestellten Mundglases.

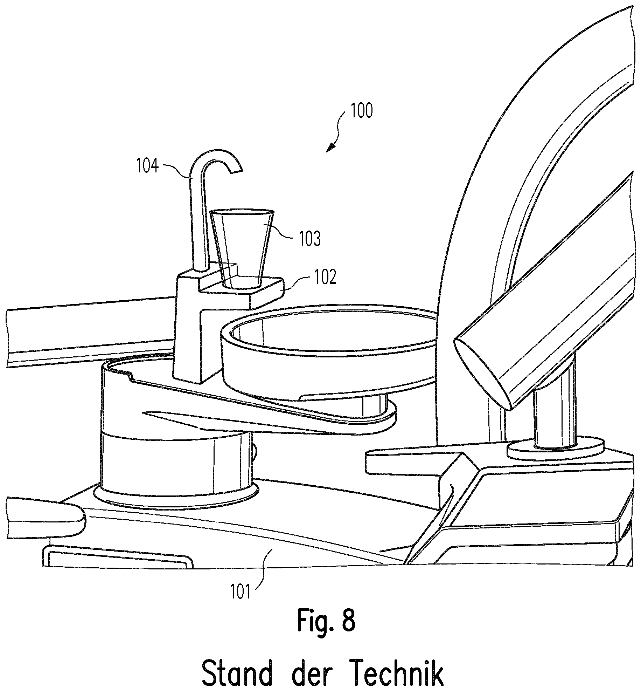

Aus dem Stand der Technik ist ein zahnärztlicher Behandlungsplatz bzw. eine zahnärztliche Behandlungseinheit bekannt, der bzw. die eine Mundglas-Befüllungsanordnung - hier im Folgenden auch kurz als Anordnung bezeichnet - aufweist. In Fig. 8 ist eine derartige Anordnung 100 beispielhaft skizziert. Sie kann an einer Basiseinheit 101 des Behandlungsplatzes angeordnet sein, insbesondere neben einem Behandlungsstuhl des Behandlungsplatzes. Die Anordnung umfasst ein Abstellelement 102 zum Abstellen eines Mundglases 103, sowie ein Zuführungsrohr 104 zum Zuführen von Wasser (oder einer anderen Flüssigkeit) zu dem Mundglas 103. Das Zuführungsrohr 104 ist dementsprechend mit einer Flüssigkeitsquelle, beispielsweise einem Flüssigkeitstank verbunden. Außerdem ist ein Betätigungselement vorgesehen; wenn Letzteres betätigt wird, fließt Wasser über das Zuführungsrohr 104 in das Mundglas 103, so dass Letzteres mit Wasser gefüllt wird.

Um ein ungewolltes Überfüllen des Mundglases 103 zu verhindern, ist es aus dem Stand der Technik bekannt, die Anordnung so zu gestalten, dass bei einem Betätigen des Betätigungselements eine bestimmte Menge Wasser über das Zuführungsrohr 104 in das Mundglas 103 abgegeben wird. Dabei ist die Menge so bemessen, dass das Mundglas 103 nicht überfüllt werden kann, wenn es vor dem Betätigen in leerem Zustand auf das Abstellelement 102 gestellt worden ist. Allerdings besteht hierbei das grundsätzliche Problem, dass ein Überfüllen des Mundglases 104 in einem Fall möglich ist, in dem sich vor dem Betätigen bereits eine bestimmte Menge Flüssigkeit in dem Mundglas 103 befunden hat.

Aus der DE 100 63 050 C2 ist eine Vorrichtung zum Erkennen des Füllstands eines Mundspülbechers eines zahnärztlichen Behandlungsgeräts bekannt. Die Vorrichtung umfasst eine Leitung zum Befüllen des Bechers sowie eine IR-Einrichtung, mit der sich erkennen lässt, ob der Behälter voll oder leer ist.

Aus der US 8,695,646 B2 ist ein Wasserspender zum Befüllen eines Behälters mit Wasser bekannt. Der Wasserspender umfasst eine Ultraschall-Einrichtung mit einem Ultraschall-Sender zum Aussenden von Ultraschall und einem Ultraschall-Empfänger, der den am Behälter oder am Wasser reflektierten Ultraschall empfängt.

Ferner zeigt die US 5,744,793 A ein Gerät zur Getränkeausgabe, bei dem während das Füllens eines Trinkbehälters der Füllzustand mittels Ultraschall überwacht wird.

Schließlich zeigt die WO 2014/065837 A1 eine Vorrichtung zum Verflüssigen eines Klebstoffs, bei der während des Befüllens eines Behälters mit dem Klebstoffmaterial wiederum der Füllzustand durch Ultraschall überwacht wird.

Der Erfindung liegt die Aufgabe zu Grunde, eine entsprechende verbesserte Anordnung anzugeben. Insbesondere soll sich mit der Anordnung besonders zuverlässig verhindern lassen, dass ein Mundglas überfüllt wird. Weiterhin soll ein Behandlungsplatz mit einer solchen Anordnung angegeben werden, sowie ein Verfahren zum Befüllen eines an einem zahnärztlichen Behandlungsplatz bereitgestellten Mundglases.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist eine Mundglas-Befüllungsanordnung oder kurz Anordnung zum Befüllen eines an einem zahnärztlichen Behandlungsplatz bereitgestellten Mundglases vorgesehen, die Mittel zum Zuführen einer Flüssigkeit zu dem Mundglas aufweist, ein Abstellelement mit einer Abstellfläche für das Mundglas sowie Mittel zum Erfassen des Füllzustands des Mundglases. Dabei sind die Mittel zum Erfassen des Füllzustands des Mundglases dazu ausgebildet, den Füllzustand mittels Schall zu erfassen.

Auf diese Weise lässt sich insbesondere erzielen, dass der Füllstand des Mundglases unabängig davon erfasst werden kann, ob sich in dem Mundglas vor einem Zuführen der Flüssigkeit mit Hilfe der Mittel zum Zuführen eine Flüssigkeit befunden hat oder nicht.

Erfindungsgemäß weisen die Mittel zum Erfassen des Füllzustands einen Schallerzeuger, einen Sensor sowie eine Bewertungseinheit auf, wobei die Bewertungseinheit dazu ausgebildet ist, auf Basis der von dem Sensor erfassten Schallsignale den Füllzustand des Mundglases zu ermitteln. Auf diese Weise lässt sich besonders geeignet erzielen, dass ein Füllen des Mundglases mit der Anordnung über einen bestimmten Füllzustand hinaus verhindert werden kann.

Erfindungsgemäß weisen die Mittel zum Erfassen des Füllzustands ferner Übertragungsmittel auf, welche einerseits den von dem Schallerzeuger erzeugten Schall auf einen Bereich richten, in dem das Mundglas zu positionieren ist, sowie andererseits reflektierten Schall oder das Mundglas transmittierenden Schall zu dem Sensor übermitteln. Auf diese Weise lässt sich ein Füllstand besonders zuverlässig erfassen.

Erfindungsgemäß weisen die Übertragungsmittel zumindest eine Bohrung auf, welche zum Übermitteln des von dem Schallerzeuger erzeugten Schalls ausgebildet ist. Hierdurch lässt sich insbesondere erzielen, dass der Schallerzeuger außerhalb einer Umgebung, die für ein Hantieren mit dem Mundglas vorgesehen ist, angeordnet werden kann. Hierdurch ist ein Handhaben des Mundglases erleichtert.

Erfindungsgemäß weisen die Mittel zum Zuführen einer Flüssigkeit zu dem Mundglas ein Zuführungsrohr auf, wobei das oder die zum Übertragen des Schalls genutzten Bohrungen zumindest teilweise dem Zuführungsrohr folgen. Auf diese Weise lässt sich die Anordnung besonders raumsparend gestalten; dies ist insbesondere vorteilhat mit Bezug auf einen Handhabungsfreiraum beim Hantieren mit dem Mundglas. Das Zuführungsrohr ist hierbei an dem Abstellelement für das Mundglas angeordnet und weist einen ersten Teil auf, der sich nach oben erstreckt, sowie einen zweiten Teil, der sich am oberen Ende des ersten Teils anschließt, gekrümmt gestaltet ist und in einer nach unten ausgerichteten Abgabeöffnung endet, über welche die Flüssigkeit das Zuführungsrohr verlässt. Die nach unten ausgerichtete Abgabeöffnung befindet sich dabei senkrecht oberhalb des Mundglases, wenn dieses wie vorgesehen auf der Abstellfläche positioniert ist. Die Bohrung ist hierbei vorzugsweise im Wesentlichen parallel zu dem ersten und dem zweiten Teil des Zuführungsrohrs geführt ausgebildet. Insbesondere kann vorgesehen sein, dass die Bohrung eine Umelnkung des Schalls um 180° bewirkt.

Erfindungsgemäß bilden das Zuführungsrohr für die Flüssigkeit und das oder die zum Übertragen des Schalls genutzten Bohrungen eine einstückig ausgeführte Baueinheit. Hierdurch ist insbesondere eine erleichterte Handhabung ermöglicht. Vorzugsweise bildet die Baueinheit dabei ein auswechselbares Element, insbesondere ein steckbares Element der Mundglas-Befüllungsanordnung.

Vorzugsweise wird die Bohrung zusätzlich auch zum Übermitteln des reflektierten Schalls genutzt. Hierdurch lässt sich die Anordnung besonders einfach und raumsparend ausbilden.

Alternativ hierzu weisen die Übertragungsmittel vorzugsweise eine zweite Bohrung auf, welche zum Übermitteln des reflektierten Schalls genutzt wird. Auf diese Weise lässt sich der zu detektierende Bereich besonders geeignet beeinflussen.

Vorzugsweise weisen das oder die zum Übertragen des Schalls genutzten Bohrungen Öffnungen auf, die im Wesentlichen im Bereich einer Abgabeöffnung des Zuführungsrohrs für die Flüssigkeit angeordnet sind. Auch hierdurch ist sich eine besonders raumsparende Gestaltung ermöglicht.

Vorzugsweise sind die Mittel zum Erfassen des Füllzustands dazu ausgebildet, während des Zuführens der Flüssigkeit kontinuierlich den Füllzustand des Behälters bzw. des Mundglases zu erfassen. Hierdurch lässt sich der Füllzustand besonders zuverlässig überwachen.

Vorzugsweise sind die Mittel zum Erfassen des Füllzustands dazu ausgebildet, vor dem Zuführen der Flüssigkeit das Vorhandensein eines Behälters bzw. des Mundglases zu detektieren. So lässt sich erzielen, dass die Flüssigkeit nur dann zugeführt wird, wenn sich ein Behälter, also beispielsweise das Mundglas wie vorgesehen angeordnet befindet.

Vorzugsweise sind die Mittel zum Erfassen des Füllzustands dazu ausgebildet, im Rahmen einer Kalibrierung ein Referenzsignal zu ermitteln, welches einem definierten Füllzustand entspricht. So lässt sich besonders geeignet ein gewünschter definierter Füllzustand festlegen.

Gemäß einem weiteren Aspekt der Erfindung ist ein Behandlungsplatz mit einer anmeldungsgemäßen Anordnung zum Befüllen eines Behälters mit einer Flüssigkeit vorgesehen.

Gemäß einem weiteren Aspekt der Erfindung ist ein Verfahren zum Befüllen eines an einem zahnärztlichen Behandlungsplatz bereitgestellten Mundglases für einen Patienten vorgesehen, wobei mittels Schall der Füllzustand des Mundglases erfasst wird.

Vorzugsweise wird dabei zum Erfassen des Füllzustands Schall auf den Behälter gerichtet wird und anhand des durch den Behälter reflektierten Schalls oder des den Behälter transmittierenden Schalls der Füllzustand bewertet.

Vorzugsweise wird dabei im Rahmen einer Kalibrierung ein Referenzsignal ermittelt, welches einem definierten Füllzustand entspricht.

Die Erfindung wird im Folgenden anhand von Ausführungsbeispielen und mit Bezug auf die Zeichnungen näher erläutert. Es zeigen:
- Fig. 1: eine Skizze zu einem ersten Ausführungsbeispiel einer anmeldungsgemäßen Mundglas-Befüllungsanordnung,
- Fig. 2: eine Skizze zu einem zweiten Ausführungsbeispiel,
- Fig. 3: eine Skizze zu einem dritten Ausführungsbeispiel,
- Fig. 4: eine Skizze zu einer Variante, die nicht Gegenstand der Ansprüche ist,
- Fig. 5: eine Skizze zu einem weiteren Ausführungsbeispiel,
- Fig. 6: eine Skizze eines Schnitts einer anmeldungsgemäßen Baueinheit mit einem Zuführungsrohr für die Flüssigkeit und mit Bohrungen zum Übertragen des Schalls,
- Fig. 7: eine Skizze eines weiteren Schnitts der Baueinheit und
- Fig. 8: einen Ausschnitt eines zahnärztlichen Behandlungsplatzes mit einer Mundglas-Befüllungsanordnung gemäß dem Stand der Technik.

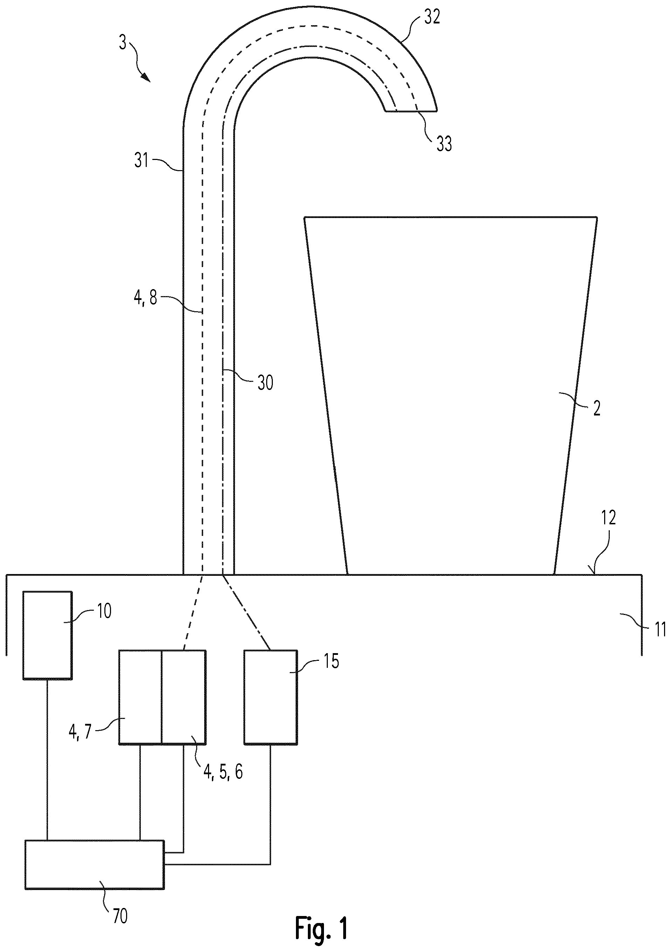

Fig. 1 zeigt eine schematische Skizze zu einem ersten Ausführungsbeispiel einer anmeldungsgemäßen Mundglas-Befüllungsanordnung zum Befüllen eines, an einem zahnärztlichen Behandlungsplatz bzw. an einer zahnärztlichen Behandlungseinheit bereitgestellten Mundglases 2. Die Mundglas-Befüllungsanordnung wird hier auch kurz als "Anordnung" bezeichnet.

Die Anordnung ist vorzugsweise als Bestandteil der zahnärztlichen Behandlungseinheit gebildet, die hier auch als Behandlungsplatz bezeichnet ist. Die Behandlungseinheit umfasst vorzugsweise eine Basiseinheit, an der die Anordnung befestigt ist. Die Basiseinheit ist vorzugsweise dazu vorgesehen, auf eine Standfläche, insbesondere einen Boden eines Raums gestellt zu werden, wobei die Basiseinheit als Träger für die Anordnung dient.

Die Anordnung umfasst ein Abstellelement 11 mit einer Abstellfläche 12 für das Mundglas 2.

Die Anordnung umfasst Mittel 3 zum Zuführen einer Flüssigkeit zu dem Mundglas 2. Bei der Flüssigkeit kann es sich insbesondere um Wasser handeln.

Dabei ist die Gestaltung vorzugsweise derart, dass mit der Anordnung die Flüssigkeit dem Mundglas 2 zugeführt werden kann, so dass das Mundglas 2 mit der Flüssigkeit gefüllt wird, wenn sich das Mundglas 2 wie vorgesehen auf der Abstellfläche 12 positioniert befindet.

Mit dem Ausdruck "Mundglas" sei hier allgemein ein Behälter bezeichnet, der sich zur Aufnahme der Flüssigkeit eignet; der Behälter muss nicht aus Glas bestehen, er kann beispielsweise alternativ aus Kunststoff bestehen.

Die Mittel 3 zum Zuführen einer Flüssigkeit weisen ein Zuführungsrohr 30 auf. Das Zuführungsrohr 30 weist vorzugsweise einen ersten Teil 31 auf, der sich insbesondere geradlinig vertikal nach oben erstreckt, sowie einen, sich an den ersten Teil 31 anschließenden zweiten Teil 32, der sich am oberen Ende des ersten Teils 31 anschließt und der gekrümmt gestaltet ist. Der zweite Teil 32 endet in einer Abgabeöffnung 33, über die die Flüssigkeit das Zuführungsrohr 30 verlässt.

Die Abgabeöffnung 33 ist nach unten ausgerichtet und befindet sich dabei senkrecht oberhalb des Mundglases 2, wenn dieses wie vorgesehen auf der Abstellfläche 12 positioniert ist, so dass die Flüssigkeit nach Austritt aus der Abgabeöffnung 33 im Weiteren in das Mundglas 2 fällt.

Erfindungsgemäß ist das Zuführungsrohr 30 als ein Teil einer Baueinheit der Anordnung gestaltet, die insbesondere an dem Abstellelement 11 angeordnet ist, beispielsweise über eine Steckverbindung. Das Zuführungsrohr 30 kann auf diese Weise besonders vorteilhaft thermo-desinfizierbar ausgeführt sein.

Das Zuführungsrohr 30 ist andererseits - beispielsweise über einen Verbindungsschlauch oder eine anderweitige Verbindungsleitung - mit einer Flüssigkeitsquelle 15 verbunden, die vorzugsweise innerhalb der Behandlungseinheit, beispielsweise innerhalb der Basiseinheit einer zahnärztlichen Behandlungseinheit angeordnet ist. Insbesondere handelt es sich bei der Flüssigkeitsquelle 15 um eine Wasserquelle 15, beispielsweise in Form eines Wassertanks. Die die Flüssigkeit leitende Verbindung zwischen dem Zuführungsrohr 30 und dem Verbindungsschlauch bzw. der Verbindungsleitung ist vorzugsweise als Steckverbindung gestaltet.

Die Anordnung umfasst weiterhin vorzugsweise ein, insbesondere manuell zu betätigendes Betätigungselement 10, wobei die Gestaltung derart ist, dass eine Betätigung des Betätigungselements 10 ein Zuführen der Flüssigkeit zu dem Mundglas 2 mit Hilfe der Mittel 3 zum Zuführen einer Flüssigkeit auslöst.

Weiterhin weist die Anordnung Mittel 4 zum Erfassen eines bzw. des Füllzustands des Mundglases 2 auf. Die Mittel 4 zum Erfassen eines Füllzustands des Mundglases 2 sind dazu ausgebildet, einen Füllzustand mittels Schall zu erfassen. Der Ausdruck "Schall" sei hier so verstanden, dass er neben hörbarem Schall auch Ultraschall mit umfasst. Bei dem Schall kann es sich also insbesondere um Ultraschall handeln, beispielsweise mit einer Frequenz zwischen 100 kHz und 1 MHz.

Dabei umfassen die Mittel 4 zum Erfassen des Füllzustands einen - in Fig. 1 lediglich symbolisch skizzierten - Schallerzeuger 5 zum Erzeugen eines bzw. des Schalls, beispielsweise in Form eines Schallwandlers. Der Schallwandler kann beispielsweise dazu ausgelegt sein, Schall in einem Frequenzbereich zwischen 150 kHz und 300 kHz zu erzeugen.

Weiterhin umfassen die Mittel 4 zum Erfassen des Füllzustands einen Sensor 6. Der Sensor 6 ist dazu ausgelegt, Schallsignale zu erfassen, die durch den vom Schallerzeuger 5 erzeugten Schall gebildet werden.

Die Mittel 4 zum Erfassen des Füllzustands weisen weiterhin Übertragungsmittel auf, welche einerseits den von dem Schallerzeuger 5 erzeugten Schall auf einen Bereich richten, in dem das Mundglas 2 zu positionieren ist, sowie andererseits reflektierten Schall, also einen reflektierten Teil des Schalls zu dem Sensor 6 übermitteln. Der reflektierte Schall bildet dabei die Schallsignale, die von dem Sensor 6 erfasst werden.

Bei dem in Fig. 1 gezeigten Ausführungsbeispiel weisen die Übertragungsmittel eine Bohrung 8 auf, welche zum Übermitteln des von dem Schallerzeuger 5 erzeugten Schalls ausgebildet ist. Hierzu ist die Bohrung 8 vorzugsweise mechanisch an den Schallerzeuger 5 angekoppelt. Bei der Bohrung 8 könnte es sich auch um ein Rohr handeln oder um eine sonstige Leitung für den Schall.

Dabei ist die Gestaltung weiterhin derart, dass die Bohrung 8 zusätzlich auch zum Übermitteln des reflektierten Schalls dient bzw. genutzt wird. Diese Gestaltung eignet sich besonders, wenn der Schallerzeuger 5 und der Sensor 6 als ein Modul ausgebildet sind, quasi als ein "Bauteil".

Eefindungsgemäß ist die Gestaltung weiterhin derart, dass die Bohrung 8 zum Übermitteln bzw. Übertragen des Schalls zumindest teilweise dem Zuführungsrohr 30 folgt. Insbesondere kann die Bohrung 8 im Wesentlichen parallel zu dem ersten Teil 31 und dem zweiten Teil 32 des Zuführungsrohrs 30 geführt ausgebildet sein. Auf diese Weise lässt sich erzielen, dass die Bohrung 8 einen Bewegungsfreiraum zum Hantieren mit dem Mundglas 2 besonders wenig beeinträchtigt. Eine zahnärztliche Behandlung mit der Behandlungseinheit ist so besonders geeignet ermöglicht.

Mit der Bohrung 8 kann der Schall quasi um 180° umgelenkt werden. Auf diese Weise lässt sich besonders geeignet erzielen, dass der Schall von der Bohrung 8 nach unten abgegeben wird, so dass er im Weiteren auf das Mundglas 2 bzw. die darin befindliche Flüssigkeit trifft.

Insbesondere ist die Bohrung 8 als Teil der Baueinheit gestaltet, durch die auch das Zuführungsrohr 30 gebildet ist. Diese Baueinheit bildet vorzugsweise ein auswechselbares Element, insbesondere ein steckbares Element der Anordnung. Die Baueinheit ist einstückig, also aus lediglich einem Teil bzw. Stück bestehend ausgebildet. Vorzugsweise ist die Gestaltung dabei derart, dass die Baueinheit in das Abstellelement 11 gesteckt werden kann. So lässt sich die Baueinheit besonders geeignet von dem Abstellelement 11 trennen, beispielweise für eine Desinfektion. Vorzugsweise weist die Bohrung 8 zum Übertragen des Schalls eine Öffnung 9 auf, die im Wesentlichen im Bereich der Abgabeöffnung 33 des Zuführungsrohrs 30 für die Flüssigkeit angeordnet ist. Durch die parallele Ausbildung der Bohrung 8 mit dem Zuführungsrohr 30 lässt sich erzielen, dass der Endbereich der Bohrung 8 auf das Mundglas 2 gerichtet ist.

So lässt sich erzielen, dass der Schall, der durch die Öffnung 9 austritt, im Weiteren auf das Mundglas 2 und gegebenenfalls auf eine, in dem Mundglas 2 befindliche Menge der Flüssigkeit trifft. An der Oberfläche der Flüssigkeit wird der Schall reflektiert und ein Teil des reflektierten Schalls tritt wieder über die Öffnung 9 in die Bohrung 8 ein, wird im Weiteren durch die Bohrung 8 geleitet und trifft schließlich auf den Sensor 6. Wenn sich keine Flüssigkeit in dem Mundglas 2 befindet, wird der Schall an einer Bodenwand des Mundglases 2 reflektiert.

Weiterhin umfassen die Mittel 4 zum Erfassen des Füllzustands eine Bewertungseinheit 7, die dazu ausgebildet ist, auf Basis der von dem Sensor 6 erfassten Schallsignale den Füllzustand des Mundglases 2 zu ermitteln. Insbesondere ist die Bewertungseinheit 7 dazu ausgestaltet, mit Hilfe der Laufzeit, die der Schall für die Strecke zwischen der Schallquelle 5 und dem Sensor 6 benötigt, die Strecke zwischen der Öffnung 9 der Bohrung 8 und der Oberfläche der Flüssigkeit, die sich in dem Mundglas 2 befindet, zu ermitteln. Mit anderen Worten kann für die Anordnung ein Impuls-Echo-Betrieb vorgesehen sein.

Dabei ist die Gestaltung weiterhin vorzugsweise derart, dass das Zuführen der Flüssigkeit zu dem Mundglas 2 in Abhängigkeit von dem durch die Bewertungseinheit 7 ermittelten Füllzustand des Mundglases 2 erfolgt. Insbesondere lässt sich auf diese Weise erzielen, dass ein Überfüllen des Mundglases 2 verhindert wird.

Weiterhin vorzugsweise weist die Anordnung eine Steuereinheit 70 auf, die dazu ausgestaltet ist, das Zuführen der Flüssigkeit über die Mittel 3 zum Zuführen, also insbesondere über das Zuführungsrohr 30, zu stoppen, sobald durch die Bewertungseinheit 7 ein bestimmter, gewünschter Füllzustand ermittelt ist. Die Steuereinheit 70 ist dementsprechend vorzugsweise mit dem Betätigungselement 10, den Mitteln 3 zum Zuführen einer Flüssigkeit und den Mitteln 4 zum Erfassen eines Füllzustands und vorzugsweise auch mit der Flüssigkeitsquelle 15 verbunden.

Vorzugsweise sind die Mittel 4 zum Erfassen des Füllzustands dazu ausgebildet, während des Zuführens der Flüssigkeit kontinuierlich den Füllzustand des Mundglases 2 zu erfassen. So lässt sich insbesondere ein besonders zuverlässiges und robustes Erfassen des Füllzustands erzielen.

Weiterhin vorzugsweise sind die Mittel 4 zum Erfassen des Füllzustands dazu ausgebildet, vor dem Zuführen der Flüssigkeit das Vorhandensein eines Behälters bzw. des Mundglases 2 zu detektieren. So lässt sich vermeiden, dass Flüssigkeit zugeführt wird, wenn auf der Abstellfläche 12 kein Behälter bzw. kein Mundglas positioniert ist. Das Schall-Reflexionsverhalten der Bodenwand des Mundglases 2 unterscheidet sich prinzipiell von demjenigen der Abstellfläche 12. Dieser Unterschied lässt sich für die Anordnung dazu nutzen, das Vorhandensein eines Mundglases zu ermitteln.

Vorzugsweise sind die Mittel 4 zum Erfassen des Füllzustands dazu ausgebildet, im Rahmen einer Kalibrierung ein Referenzsignal zu ermitteln, welches einem definierten Füllzustand entspricht. Der definierte Füllzustand kann insbesondere dem gewünschten Füllzustand entsprechen. So lässt sich ein bestimmter gewünschter Füllzustand besonders zuverlässig ermitteln. Weiterhin vorzugsweise ist dabei die Gestaltung derart, dass mit den Mitteln 3 zum Zuführen einer Flüssigkeit das Zuführen gestoppt wird, sobald der definierte bzw. gewünschte Füllzustand erreicht ist.

Bei einem anmeldungsgemäßen Verfahren zum Befüllen eines an einem zahnärztlichen Behandlungsplatz bereitgestellten Mundglases 2 für einen Patienten, wird also mittels Schall der Füllzustand des Mundglases 2 erfasst. Dabei wird vorzugsweise zum Erfassen des Füllzustands Schall auf das Mundglas 2 bzw. den Behälter gerichtet und anhand des durch den Behälter bzw. eine darin befindliche Flüssigkeit reflektierten Schalls der Füllzustand bewertet.

Um einen gewünschten definierten Füllzustand zu erfassen, wird vorzugsweise im Rahmen einer Kalibrierung ein Referenzsignal ermittelt, welches dem definierten Füllzustand entspricht.

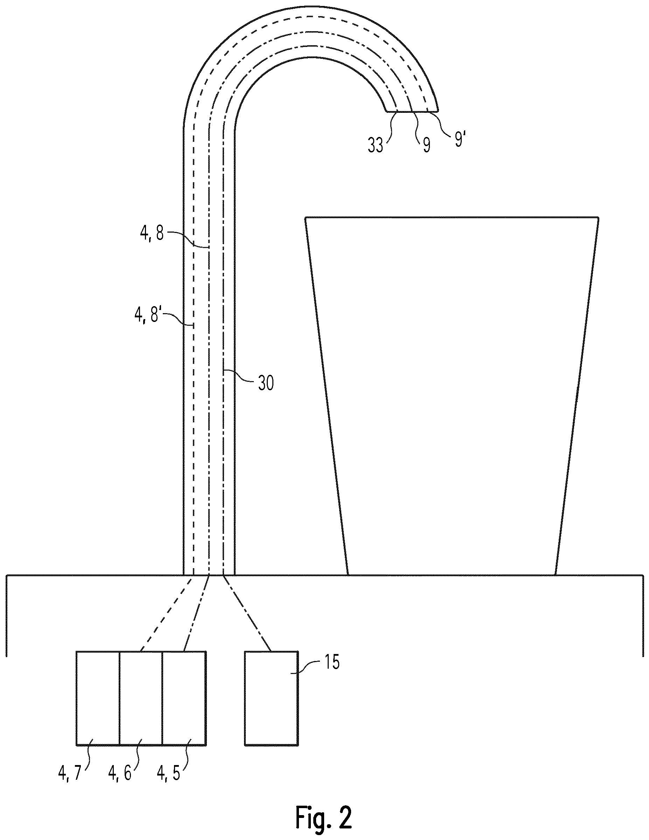

In Fig. 2 ist eine Skizze zu einem zweiten Ausführungsbeispiel einer anmeldungsgemäßen Anordnung gezeigt. Die Steuereinheit 70 und das Betätigungselement 10 sind hier der Übersichtlichkeit halber nicht eingezeichnet, jedoch in analoger Weise vorgesehen. Soweit nicht anders angegeben, gelten die obigen Ausführungen zum ersten Ausführungsbeispiel in analoger Weise auch für das zweite Ausführungsbeispiel. Auch die Bezugszeichen sind analog gebraucht.

Beim zweiten Ausführungsbeispiel weisen die Übertragungsmittel der Mittel 4 zum Erfassen des Füllzustands weiterhin eine zweite bzw. weitere Bohrung 8' auf, welches dazu ausgestaltet ist, den reflektierten Schall zu übermitteln, insbesondere zu dem Sensor 6 zu übermitteln. Diese Gestaltung eignet sich besonders, wenn der Schallerzeuger 5 und der Sensor 6 als zwei separate Teile ausgebildet sind.

Vorzugsweise folgt auch die weitere Bohrung 8' zumindest teilweise dem Zuführungsrohr 30 zum Zuführen der Flüssigkeit. Insbesondere kann auch die weiter Bohrung 8' im Wesentlichen parallel zu dem ersten Teil 31 und dem zweiten Teil 32 des Zuführungsrohrs 30 geführt ausgebildet sein. Auf diese Weise lässt sich erzielen, dass auch die weitere Bohrung 8' den Bewegungsfreiraum zum Hantieren mit dem Mundglas 2 besonders wenig beeinträchtigt.

Vorzugsweise weist die weitere Bohrung 8' zum Übertragen des reflektierten Schalls eine weitere Öffnung 9' auf, die im Wesentlichen im Bereich der Abgabeöffnung 33 des Zuführungsrohrs 30 für die Flüssigkeit angeordnet ist. Durch die parallele Ausbildung der weiteren Bohrung 8' mit dem Zuführungsrohr 30 und der zuerst genannten Bohrung 8 lässt sich erzielen, dass der Endbereich der weiteren Bohrung 8' auf das Mundglas 2 gerichtet ist. So lässt sich erzielen, dass der an der Oberfläche der Flüssigkeit reflektierte Schall geeignet über die weitere Öffnung 9' die weitere Bohrung 8' eintreten kann, durch dieses geleitet wird und schließlich auf den Sensor 9 trifft.

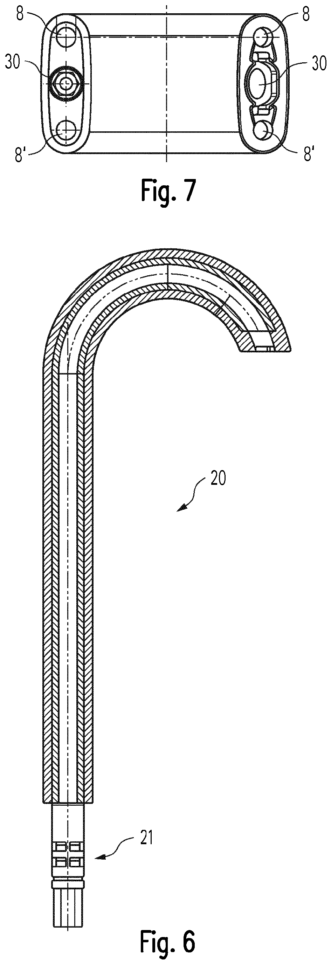

Insbesondere kann die weitere Bohrung 8' als ein noch weiteres Teil der Baueinheit gestaltet sein, durch die auch das Zuführungsrohr 30 gebildet ist. In Fig. 6 ist eine Skizze eines Schnitts einer solchen Baueinheit 20 gemäß dem zweiten Ausführungsbeispiel gezeigt, in Fig. 7 eine Skizze eines weiteren Schnitts der Baueinheit 20. Die Baueinheit 20 umfasst das Zuführungsrohr 30 für die Flüssigkeit, die Bohrung 8 und die weitere Bohrung 8', also die beiden Bohrungen 8, 8' zum Übertragen des Schalls. Vorzugsweise ist die Baueinheit 20 derart gestaltet, dass sie lediglich das Zuführungsrohr 30 und die beiden Bohrungen8, 8' umfasst bzw. bildet.

Am unteren Endbereich der Baueinheit 20 ist ein Steckelement 21 ausgebildet, das zum Einstecken der Baueinheit 20 in eine korrespondierende Öffnung in dem Abstellelement 11 ausgebildet ist. Die Baueinheit 20 kann also einfach in das Abstellelement 11 gesteckt werden.

Die Gestaltung kann derart sein, dass die Bohrung 8 und die weitere Bohrung 8' mit ihren Endbereichen parallel zueinander orientiert sind. Alternativ kann die Gestaltung derart sein, dass die Endbereiche der Bohrung 8 und der weiteren Bohrung 8' in einem bestimmten Winkel zueinander orientiert ausgebildet sind - also abweichend von einer parallelen Orientierung. Hierdurch lässt sich der zu detektierende Bereich besonders geeignet bestimmen. Insbesondere lässt sich auf diese Weise der örtliche Auswertebereich besonders groß gestalten bzw. es können unterschiedliche örtliche Geometrien ausgewertet werden. Insbesondere lässt sich auf diese Weise ein oberer Randbereich des Mundglases 2 und damit ein maximaler Füllzustand besonders geeignet erfassen. So lässt sich im Weiteren erzielen, dass der gewünschte Füllzustand in Abhängigkeit von dem maximalen Füllzustand festgelegt wird. Mit anderen Worten lässt sich der gewünschte Füllzustand prozentual zum maximalen Füllzustand definieren.

Bei dieser Ausgestaltung lässt sich der gewünschte Füllzustand insbesondere unabhängig von den geometrischen Merkmalen des Mundglases 2 festlegen. So eignet sich die Anordnung beispielsweise für unterschiedliche Typen von Mundgläsern bzw.

Behältern, wie beispielsweise Einweg-Kunststoffbecher aus Polystyrol, Mehrweg-Kunststoffbecher aus Polycarbonat, Mehrweg-Glasbecher u. s. w.

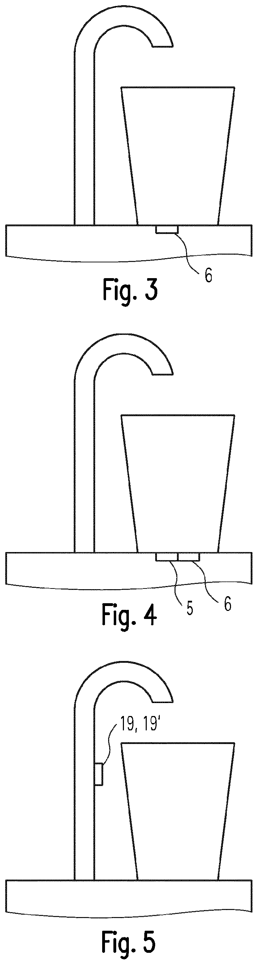

In Fig. 3 ist eine Skizze zu einem dritten Ausführungsbeispiel gezeigt. Bei dieser Ausführung ist vorgesehen, dass der Sensor 6 in dem Abstellelement 11 angeordnet ist, so dass er sich unterhalb des Mundglases 2 befindet, wenn dieses wie vorgesehen auf der Abstellfläche 21 positioniert ist. Ansonsten ist die Gestaltung wie beim ersten Ausführungsbeispiel, d. h. die Bohrung 8 zum Übermitteln des Schalls ist dem Zuführrohr 30 folgend gestaltet, insbesondere als Teil der Baueinheit. Der Schall tritt aus der Öffnung 9 der Bohrung 8 aus und trifft auf die Oberfläche der Flüssigkeit. Ein Teil des Schalls wird durch die Flüssigkeit hindurch transmittiert, durchsetzt die Bodenwand des Mundglases 2 und trifft schließlich auf den Sensor 6. Mit dem Sensor 6 wird hier also ein das Mundglas 2 und gegebenenfalls die darin befindliche Flüssigkeit transmittierender Schall erfasst.

Die Schallgeschwindigkeit beträgt bei einer Temperatur von 20 °C in Luft etwa 343 m/s, in Wasser hingegen etwa 1484 m/s. Daher ist die Schallgeschwindigkeit in Wasser etwa um den Faktor 4,3 größer als in Luft. Somit wird die Laufzeit mit zunehmender Menge an Flüssigkeit, die sich in dem Mundglas 2 befindet, kürzer, so dass sich auf diesem Weg der Füllzustand ermitteln lässt.

In Fig. 4 ist eine Skizze zu einer Variante gezeigt, die nicht Gegenstand der Ansprüche ist. Hier ist vorgesehen, dass sowohl der Schallerzeuger 5, als auch der Sensor 6 in dem Abstellelement 11 angeordnet sind, so dass sie sich beide unterhalb des Mundglases 2 befinden, wenn dieses vorgesehen positioniert ist. Hier wird die Laufzeit des Schalls ermittelt, der an der Oberfläche der Flüssigkeit nach unten reflektiert wird.

In Fig. 5 ist eine Skizze zu einem weiteren Ausführungsbeispiel gezeigt. Bei dieser Ausführung ist vorgesehen, dass die Öffnung der Bohrung 8 - hier mit dem Bezugszeichen 19 bezeichnet - und die weitere Öffnung der weiteren Bohrung 8' - hier mit dem Bezugszeichen 19' bezeichnet - in einer Höhe angeordnet sind, die der gewünschten Füllhöhe bzw. dem gewünschten Füllzustand entspricht. Die Öffnungen 19, 19' sind dabei seitlich, insbesondere horizontal auf einen Bereich gerichtet, in dem das Mundglas 2 zu positionieren ist. Sobald bei einem Einfüllvorgang der Spiegel der Flüssigkeit die Höhe der Öffnungen 19, 19' erreicht, ändert sich das von dem Sensor 6 erfasste Signal sprungartig, so dass sich auf diese Weise ermitteln lässt, wann der gewünschte Füllzustand erreicht ist. Für ein kontinuierliches Erfassen des Füllzustands ist diese Ausführung jedoch weniger geeignet.

Mit einer anmeldungsgemäßen Anordnung lassen sich insbesondere die folgenden Vorteile erzielen:
- Es lässt sich detektieren, ob sich ein Behälter auf der Abstellfläche der Anordnung befindet.
- Der Füllzustand des Behälters lässt sich bestimmen.
- Die Füllstandmessung erfolgt robust und unabhängig von dem verwendeten Behälter.
- Der Becherrand kann detektiert werden.
- Der Becher wird bis zu einem definierten bzw. gewünschten Füllzustand automatisch gefüllt.

## Patentansprüche

1. Mundglas-Befüllungsanordnung zum Befüllen eines an einem zahnärztlichen Behandlungsplatz bereitgestellten Mundglases (2), aufweisend
ein Abstellelement (11) mit einer Abstellfläche (12) für das Mundglas (2),
Mittel (3) zum Zuführen einer Flüssigkeit zu dem Mundglas (2), welche ein Zuführungsrohr (30) aufweisen, sowie
Mittel (4) zum Erfassen des Füllzustands des Mundglases (2),
wobei die Mittel (4) zum Erfassen des Füllzustands des Mundglases (2) dazu ausgebildet sind, den Füllzustand mittels Schall zu erfassen,
wobei die Mittel (4) zum Erfassen des Füllzustands einen Schallerzeuger (5), einen Sensor (6) sowie eine Bewertungseinheit (7) aufweisen, wobei die Bewertungseinheit (7) dazu ausgebildet ist, auf Basis der von dem Sensor (6) erfassten Schallsignale den Füllzustand des Mundglases (2) zu ermitteln,
wobei die Mittel (4) zum Erfassen des Füllzustands ferner Übertragungsmittel aufweisen, welche
• einerseits den von dem Schallerzeuger (5) erzeugten Schall auf einen Bereich richten, in dem das Mundglas (2) zu positionieren ist, sowie
• andererseits reflektierten Schall oder das Mundglas (2) transmittierenden Schall zu dem Sensor (6) übermitteln,
wobei die Übertragungsmittel zumindest eine Bohrung (8) aufweisen, welche zum Übermitteln des von dem Schallerzeuger (5) erzeugten Schalls ausgebildet ist und zumindest teilweise dem Zuführungsrohr (30) folgt,
wobei
das Zuführungsrohr (30) für die Flüssigkeit und die zum Übertragen des Schalls genutzte mindestens eine Bohrung (8, 8') eine einstückig ausgeführte Baueinheit (20) bilden,
**dadurch gekennzeichnet,**
**dass** das Zuführungsrohr (30) an dem Abstellelement (11) für das Mundglas (2) angeordnet ist und einen ersten Teil (31) aufweist, der sich nach oben erstreckt, sowie einen zweiten Teil (32), der sich am oberen Ende des ersten Teils (31) anschließt, gekrümmt gestaltet ist und in einer nach unten ausgerichteten Abgabeöffnung (33) endet, über welche die Flüssigkeit das Zuführungsrohr (30) verlässt,
wobei sich die nach unten ausgerichtete Abgabeöffnung (33) senkrecht oberhalb des Mundglases (2) befindet, wenn dieses wie vorgesehen auf der Abstellfläche (12) positioniert ist.

2. Mundglas-Befüllungsanordnung nach Anspruch 1,
**dadurch gekennzeichnet,**
**dass** die Bohrung (8) im Wesentlichen parallel zu dem ersten Teil (31) und dem zweiten Teil (32) des Zuführungsrohrs (30) geführt ausgebildet ist.

3. Mundglas-Befüllungsanordnung nach Anspruch 1 oder 2,
**dadurch gekennzeichnet,**
**dass** die Bohrung (8) eine Umlenkung des Schalls um 180° bewirkt.

4. Mundglas-Befüllungsanordnung nach einem der Ansprüche 1 bis 3,
**dadurch gekennzeichnet,**
**dass** die einstückig ausgeführte Baueinheit (20) ein auswechselbares Element der Mundglas-Befüllungsanordnung bildet, welches über eine Steckverbindung an dem Abstellelement (11) für das Mundglas (2) angeordnet ist.

5. Mundglas-Befüllungsanordnung nach Anspruch 4,
**dadurch gekennzeichnet,**
**dass** über die Steckverbindung eine Flüssigkeit leitende Verbindung mit einem Verbindungsschlauch bzw. einer Verbindungsleitung erzielt wird, über welche das Zuführungsrohr (30) mit einer Flüssigkeitsquelle (15) einer Behandlungseinheit verbunden ist.

6. Mundglas-Befüllungsanordnung nach einem der Ansprüche 1 bis 5,
**dadurch gekennzeichnet,**
**dass** die Bohrung (8) zusätzlich auch zum Übermitteln des reflektierten Schalls genutzt wird.

7. Mundglas-Befüllungsanordnung nach einem der Ansprüche 1 bis 5,
**dadurch gekennzeichnet,**
**dass** die Übertragungsmittel ein zweite Bohrung (8') aufweisen, welche zum Übermitteln des reflektierten Schalls genutzt wird.

8. Mundglas-Befüllungsanordnung nach einem der vorhergehenden Ansprüche, **dadurch gekennzeichnet,**
**dass** das oder die zum Übertragen des Schalls genutzten Bohrungen (8, 8') Öffnungen (9, 9') aufweisen, die im Wesentlichen im Bereich der Abgabeöffnung (33) des Zuführungsrohrs (30) für die Flüssigkeit angeordnet sind.

9. Mundglas-Befüllungsanordnung nach einem der vorherigen Ansprüche,
**dadurch gekennzeichnet,**
**dass** die Mittel (4) zum Erfassen des Füllzustands dazu ausgebildet sind, während des Zuführens der Flüssigkeit kontinuierlich den Füllzustand des Behälters zu erfassen.

10. Mundglas-Befüllungsanordnung nach einem der vorherigen Ansprüche, **dadurch gekennzeichnet,**
**dass** die Mittel (4) zum Erfassen des Füllzustands dazu ausgebildet sind, vor dem Zuführen der Flüssigkeit das Vorhandensein eines Behälters zu detektieren.

11. Mundglas-Befüllungsanordnung nach einem der vorherigen Ansprüche, **dadurch gekennzeichnet,**
**dass** die Mittel (4) zum Erfassen des Füllzustands dazu ausgebildet sind, im Rahmen einer Kalibrierung ein Referenzsignal zu ermitteln, welches einem definierten Füllzustand entspricht.

12. Behandlungsplatz mit einer Anordnung zum Befüllen eines Behälters mit einer Flüssigkeit nach einem der vorherigen Ansprüche.

13. Verfahren zum Befüllen eines an einer Abstellfläche (12) eines Abstellelements (11) eines zahnärztlichen Behandlungsplatzes bereitgestellten Mundglases (2) für einen Patienten,
wobei mit Hilfe eines Zuführungsrohrs (30) eine Flüssigkeit zu dem Mundglas (2), zugeführt wird,
und wobei zum Erfassen des Füllzustands des Mundglases (2) Schall auf das Mundglas (2) gerichtet wird und anhand des durch das Mundglas (2) reflektierten Schalls oder des das Mundglas (2) transmittierenden Schalls der Füllzustand bewertet wird,
wobei das Übermitteln des von einem Schallerzeuger (5) erzeugten Schalls über zumindest eine Bohrung (8) erfolgt, die zumindest teilweise dem Zuführungsrohr (30) folgt,
wobei das Zuführungsrohr (30) für die Flüssigkeit und die zum Übertragen des Schalls genutzte mindestens eine Bohrung (8, 8') eine einstückig ausgeführte Baueinheit (20) bilden,
**dadurch gekennzeichnet,**
**dass** das Zuführungsrohr (30) an dem Abstellelement (11) für das Mundglas (2) angeordnet ist und einen ersten Teil (31) aufweist, der sich nach oben erstreckt, sowie einen zweiten Teil (32), der sich am oberen Ende des ersten Teils (31) anschließt, gekrümmt gestaltet ist und in einer nach unten ausgerichteten Abgabeöffnung (33) endet, über welche die Flüssigkeit das Zuführungsrohr (30) verlässt,
wobei sich die nach unten ausgerichtete Abgabeöffnung (33) hierbei senkrecht oberhalb des Mundglases (2) befindet, wenn dieses wie vorgesehen auf der Abstellfläche (12) positioniert ist.

14. Verfahren nach Anspruch 13,
**dadurch gekennzeichnet,**
**dass** im Rahmen einer Kalibrierung ein Referenzsignal ermittelt wird, welches einem definierten Füllzustand entspricht.

## Claims

1. Rinsing glass filling arrangement for filling a rinsing glass (2) provided on a dental treatment station, having
a setting-down element (11) having a setting-down surface (12) for the rinsing glass (2),
means (3) for supplying a liquid to the rinsing glass (2), said means having a supply pipe (30), and
means (4) for detecting the fill level of the rinsing glass (2),
wherein the means (4) for detecting the fill level of the rinsing glass (2) are designed to detect the fill level using sound,
wherein the means (4) for detecting the fill level have a sound generator (5), a sensor (6) and an evaluation unit (7), wherein the evaluation unit (7) is designed to determine the fill level of the rinsing glass (2) on the basis of the sound signals detected by the sensor (6),
wherein the means (4) for detecting the fill level furthermore have transmission means that
• firstly direct the sound generated by the sound generator (5) onto a region in which the rinsing glass (2) is to be positioned, and
• secondly convey reflected sound or sound transmitted by the rinsing glass (2) to the sensor (6),
wherein the transmission means have at least one bore (8) that is designed to convey the sound generated by the sound generator (5) and at least partly follows the supply pipe (30),
wherein the supply pipe (30) for the liquid and the at least one bore (8, 8') used to transmit the sound form an integrally formed structural unit (20),
**characterized**
**in that** the supply pipe (30) is arranged on the setting-down element (11) for the rinsing glass (2) and has a first part (31) that extends upwards, and a second part (32) that adjoins the upper end of the first part (31), is curved and ends in a downwardly oriented dispensing opening (33) via which the liquid leaves the supply pipe (30),
wherein the downwardly oriented dispensing opening (33) is located vertically above the rinsing glass (2) when said rinsing glass is positioned as intended on the setting-down surface (12).

2. Rinsing glass filling arrangement according to Claim 1,
**characterized**
**in that** the bore (8) is designed to run substantially parallel to the first part (31) and the second part (32) of the supply pipe (30).

3. Rinsing glass filling arrangement according to Claim 1 or 2,
**characterized**
**in that** the bore (8) deflects the sound by 180°.

4. Rinsing glass filling arrangement according to one of Claims 1 to 3,
**characterized**
**in that** the integrally formed structural unit (20) forms an exchangeable element of the rinsing glass filling arrangement that is arranged on the setting-down element (11) for the rinsing glass (2) via a plug connection.

5. Rinsing glass filling arrangement according to Claim 4,
**characterized**
**in that** the plug connection is used to achieve a liquid-channelling connection to a connecting tube or a connecting line via which the supply pipe (30) is connected to a liquid source (15) of a treatment unit.

6. Rinsing glass filling arrangement according to one of Claims 1 to 5,
**characterized**
**in that** the bore (8) is also additionally used to convey the reflected sound.

7. Rinsing glass filling arrangement according to one of Claims 1 to 5,
**characterized**
**in that** the transmission means have a second bore (8') that is used to convey the reflected sound.

8. Rinsing glass filling arrangement according to one of the preceding claims,
**characterized**
**in that** the bore or bores (8, 8') used to transmit the sound have openings (9, 9') that are arranged substantially in the region of the dispensing opening (33) of the supply pipe (30) for the liquid.

9. Rinsing glass filling arrangement according to one of the preceding claims,
**characterized**
**in that** the means (4) for detecting the fill level are designed to continuously detect the fill level of the container during the supplying of the liquid.

10. Rinsing glass filling arrangement according to one of the preceding claims,
**characterized**
**in that** the means (4) for detecting the fill level are designed to detect the presence of a container prior to the supplying of the liquid.

11. Rinsing glass filling arrangement according to one of the preceding claims,
**characterized**
**in that** the means (4) for detecting the fill level are designed, during a calibration, to determine a reference signal that corresponds to a defined fill level.

12. Treatment station having an arrangement for filling a container with a liquid according to one of the preceding claims.

13. Method for filling a rinsing glass (2), provided on a setting-down surface (12) of a setting-down element (11) of a dental treatment station, for a patient,
wherein a liquid is supplied to the rinsing glass (2) with the aid of a supply pipe (30),
and wherein, in order to detect the fill level of the rinsing glass (2), sound is directed onto the rinsing glass (2) and the fill level is evaluated on the basis of the sound reflected by the rinsing glass (2) or of the sound transmitted by the rinsing glass (2),
wherein the sound generated by a sound generator (5) is conveyed by at least one bore (8) that at least partly follows the supply pipe (30),
wherein the supply pipe (30) for the liquid and the at least one bore (8, 8') used to transmit the sound form an integrally formed structural unit (20),
**characterized**
**in that** the supply pipe (30) is arranged on the setting-down element (11) for the rinsing glass (2) and has a first part (31) that extends upwards, and a second part (32) that adjoins the upper end of the first part (31), is curved and ends in a downwardly oriented dispensing opening (33) via which the liquid leaves the supply pipe (30),
wherein the downwardly oriented dispensing opening (33) is located vertically in this case above the rinsing glass (2) when said rinsing glass is positioned as intended on the setting-down surface (12).

14. Method according to Claim 13,
**characterized**
**in that** a reference signal that corresponds to a defined fill level is determined during a calibration.

## Revendications

1. Ensemble de remplissage de gobelets destiné remplir un gobelet (2) placé à un poste de traitement dentaire, ledit ensemble comportant un élément de placement (11) pourvu d'une surface de placement (12) destinée au gobelet (2), des moyens (3) destinés à amener un liquide au gobelet (2) et comportant un tube d'amenée (30), et des moyens (4) destinés à détecter l'état de remplissage du gobelet (2), les moyens (4) destinés à détecter l'état de remplissage du gobelet (2) étant conçus pour détecter l'état de remplissage au moyen du son,
les moyens (4) destinés à détecter l'état de remplissage comportant un générateur de son (5), un capteur (6) et une unité d'évaluation (7), l'unité d'évaluation (7) étant conçue pour déterminer l'état de remplissage du gobelet (2) sur la base de signaux sonores détectés par le capteur (6),
les moyens (4) destinés à détecter l'état de remplissage comprenant en outre des moyens de transmission qui
• dirigent d'une part le son généré par le générateur de son (5) vers une zone dans laquelle le gobelet (2) doit être positionné, et
• transmettent d'autre part le son réfléchi ou le son transmis par le gobelet (2) au capteur (6),
les moyens de transmission comportant au moins un perçage (8) qui est conçu pour transmettre le son généré par le générateur de son (5) et qui suit au moins partiellement le tube d'amenée (30),
le tube d'amenée (30) destiné au liquide et l'au moins un perçage (8, 8') utilisé pour transmettre le son formant une unité structurelle monobloc (20),
**caractérisé en ce que**
le tube d'amenée (30) est disposé au niveau de l'élément de placement (11) du gobelet (2) et comporte une première partie (31) qui s'étend vers le haut et une deuxième partie (32) qui se raccorde à l'extrémité supérieure de la première partie (31), qui est incurvée et qui se termine par une ouverture de sortie (33) orientée vers le bas par laquelle le liquide quitte le tube d'amenée (30),
l'ouverture de sortie orientée vers le bas (33) étant située perpendiculairement au-dessus du gobelet (2) lorsque celui-ci est positionné comme prévu sur la surface de placement (12).

2. Ensemble de remplissage de gobelets selon la revendication 1,
**caractérisé en ce que**
le perçage (8) est conçu pour être guidé sensiblement parallèlement à la première partie (31) et à la deuxième partie (32) du tube d'amenée (30).

3. Ensemble de remplissage de gobelets selon la revendication 1 ou 2,
**caractérisé en ce que**
le perçage (8) provoque une déviation du son de 180°.

4. Ensemble de remplissage de gobelets selon l'une des revendications 1 à 3,
**caractérisé en ce que**
l'unité structurelle monobloc (20) forme un élément remplaçable de l'ensemble de remplissage de gobelets qui est disposé par une liaison d'enfichage sur l'élément de placement (11) destiné au gobelet (2).

5. Ensemble de remplissage de gobelets selon la revendication 4,
**caractérisé en ce que**
une liaison conductrice de liquide est réalisée par le biais de la liaison d'enfichage avec un tuyau de liaison ou une conduite de liaison permettant de relier le tube d'amenée (30) à une source de liquide (15) d'une unité de traitement.

6. Ensemble de remplissage de gobelets selon l'une des revendications 1 à 5,
**caractérisé en ce que**
le perçage (8) est également utilisé pour transmettre le son réfléchi.

7. Ensemble de remplissage de gobelets selon l'une des revendications 1 à 5,
**caractérisé en ce que**
les moyens de transmission comportent un deuxième perçage (8') qui est utilisé pour transmettre le son réfléchi.

8. Ensemble de remplissage de gobelets selon l'une des revendications précédentes,
**caractérisé en ce que**
le perçage ou les perçages (8, 8') utilisés pour transmettre le son comportent des ouvertures (9, 9') qui sont disposées sensiblement dans la zone de l'ouverture de sortie (33) du tube d'amenée (30) destiné au liquide.

9. Ensemble de remplissage de gobelets selon l'une des revendications précédentes,
**caractérisé en ce que**
les moyens (4) destinés à détecter l'état de remplissage sont conçus pour détecter en continu l'état de remplissage du récipient pendant l'amenée du liquide.

10. Ensemble de remplissage de gobelets selon l'une des revendications précédentes,
**caractérisé en ce que**
les moyens (4) destinés à détecter l'état de remplissage sont conçus pour détecter la présence d'un récipient avant d'amener le liquide.

11. Ensemble de remplissage de gobelets selon l'une des revendications précédentes,
**caractérisé en ce que**
les moyens (4) destinés à détecter l'état de remplissage sont conçus pour déterminer, dans le cadre d'un étalonnage, un signal de référence qui correspond à un état de remplissage défini.

12. Poste de traitement comportant un ensemble destiné à remplir un récipient avec un liquide selon l'une des revendications précédentes.

13. Procédé de remplissage d'un gobelet (2) destiné à un patient et placé sur une surface de placement (12) d'un élément de placement (11) d'un poste de traitement dentaire,
un liquide étant amené au gobelet (2) à l'aide d'un tube d'amenée (30),
et, afin de détecter l'état de remplissage du gobelet (2), le son étant dirigé vers le gobelet (2) et l'état de remplissage étant évalué sur la base du son réfléchi par le gobelet (2) ou du son transmis à travers le gobelet (2),
la transmission du son généré par un générateur de son (5) étant effectuée par au moins un perçage (8) qui suit au moins partiellement le tube d'amenée (30),
le tube d'amenée (30) destiné au liquide et l'au moins un perçage (8, 8') utilisé pour transmettre le son formant une unité structurelle monobloc (20),
**caractérisé en ce que**
le tube d'amenée (30) est disposé sur l'élément de placement (11) du gobelet (2) et comporte une première partie (31) qui s'étend vers le haut et une deuxième partie (32) qui se raccorde à l'extrémité supérieure de la première partie (31), qui est incurvée et qui se termine par une ouverture de sortie (33) orientée vers le bas par laquelle le liquide quitte le tube d'amenée (30),
l'ouverture de sortie (33) orientée vers le bas étant située perpendiculairement au-dessus du gobelet (2) lorsque celui-ci est positionné comme prévu sur la surface de placement (12).

14. Procédé selon la revendication 13,
**caractérisé en ce que**
un signal de référence qui correspond à un état de remplissage défini est déterminé dans le cadre d'un étalonnage.
